# EUROPÄISCHE PATENTSCHRIFT

(11) **EP 0 780 882 B1**
(45) Veröffentlichungstag und Bekanntmachung des Hinweises auf die Patenterteilung: **16.10.2002**
(21) Anmeldenummer: 96117567.6
(22) Anmeldetag: 02.11.1996
(51) Int. Cl.: H01J 65/04, H01J 61/04, H01J 61/30, H01J 61/12, H01J 61/35, G01J 3/10

(54) **Elektrodenlose Entladungslampe mit Blendenkörper**
Electrodeless discharge lamp with a diaphragm member
Lampe à décharge sans électrodes avec un élément de diaphragme

(30) Priorität: 20.12.1995 DE 19547813
(43) Veröffentlichungstag der Anmeldung: 25.06.1997
(73) Patentinhaber: Heraeus Noblelight GmbH, 63450 Hanau (DE)
(72) Erfinder: Smolka, Ernst, Dr., 67346 Speyer (DE); Herter, Beate, 70563 Stuttgart (DE); Schnabl, Anke, 63546 Hammersbach (DE); Schilling, Franz, D-63579 Freigericht (DE)
(74) Vertreter: Kühn, Hans-Christian

(56) Entgegenhaltungen:
- EP-A- 0 184 217
- DE-U- 1 731 577
- GB-A- 2 257 562
- US-A- 2 068 595

## Beschreibung

Die Erfindung betrifft eine elektrodenlose Niederdruck-Entladungslampe, in deren Entladungsgefäß ein Plasma durch Einkoppelung eines hochfrequenten elektromagnetischen Feldes gebildet ist und durch das Plasma erzeugte Strahlung aus dem Entladungsgefäß durch einen wenigstens für UV-Strahlen durchlässigen Bereich des Entladungsgefäßes austritt, wobei im Bereich des Plasmas wenigstens ein Blendenkörper aus hochtemperaturbeständigem Werkstoff angeordnet ist, der wenigstens eine Öffnung zur Einschnürung des Plasma-Bereichs aufweist.

Aus der DE-OS 41 20 730 ist eine elektrodenlose Niederdruckentladungslampe bekannt, in deren Lampenkolben ein Plasma durch Einkoppelung eines hochfrequenten elektromagnetischen Feldes gebildet wird und durch das Plasma erzeugte Strahlung aus dem Kolben heraustritt; dabei ist im Bereich des Plasmas ein Blendenkörper aus hochtemperaturbeständigem Werkstoff angeordnet, welcher eine Öffnung zur Einschnürung des Plasmabereiches enthält, wobei der Blendenkörper eine optische Achse durch die Öffnung aufweist entlang derer die Strahlung austritt. Um bei der Plasmaeinschnürung im Hochfrequenzfeld genügend hohe Strahlungsflüsse und Strahldichten zu erzielen, müssen die Werkstoffe hohe Wandbelastungen vertragen, so daß sie sich bei Temperaturen von mehr als 1500° Kelvin nicht zersetzen, schmelzen, Verunreinigungen freigeben oder gar in Folge des Thermoschocks beim Ein- und Ausschalten der Lampen zerspringen.

In der DE-OS 41 20 730 wird vorzugsweise Bornitrit als Werkstoff für den Blendenkörper eingesetzt.

Als problematisch erweist sich die Wärmeabführung aus dem Bereich des Blendenkörpers, in dem das Plasma eingeschnürt wird, aufgrund des ihn umgebenden Lampenkolbens; im Zuge zunehmender Miniaturisierung von Strahlenquellen erweist sich die bekannte Entladungslampe hinsichtlich ihres Aufbaus als verhältnismäßig aufwendig.

Weiterhin ist aus der GB-PS 10 03 873 eine elektrodenlose Hochfrequenz-Entladungsspektrallampe bekannt, welche einen hohlförmig abgeschlossenen Lampenkolben aus lichtdurchlässigem Werkstoff enthält, wobei der Lampenkolben in zwei Teile aufgeteilt ist, die mittels einer kapillaren Durchführung miteinander verbunden sind und wobei elektromagnetische Anordnungen zur Erregung einer Entladung innerhalb des im Kolben befindlichen Metalldampfes vorgesehen sind. Die Einkoppelung der elektromagnetischen Energie zur Entladung wird über eine den Lampenkolben umgebende Spulenanordnung aufrechterhalten, wobei die eigentliche Zündung über äußere Elektroden erfolgt.

Als problematisch erweisen sich nach der GB-PS die erheblichen Zündprobleme, so daß zusätzliche Elektroden im Außenbereich des Lampenkolbens vorgesehen werden müssen, die die Zündung einleiten; eine gerichtete Abstrahlung entlang einer bevorzugten Strahlenachse ist dabei nicht vorgesehen.

Auch handelt es sich um einen verhältnismäßig aufwendigen Aufbau, welcher insbesondere bei kleinen Bauausführungen, wie sie bei zunehmender Miniaturisierung gewünscht werden, im Wege steht.

Aufgabe der Erfindung ist es, eine Niederdruck-Entladungslampe, insbesondere eine Niederdruck-Gasentladungslampe mit kontinuierlichem Spektrum, insbesondere im UV-Bereich mit möglichst hoher Strahldichte bei hoher Strahlungsstabilität bei gerichteter Abstrahlung in einem kleinen Raumwinkel zu realisieren; weiterhin soll ein einfacher mechanischer Aufbau auch bei kleinen geometrischen Abmessungen erzielt werden, um sie ggf. als Lichtquelle bei Spektralphotometern, insbesondere bei Flüssigkeitschromatographen (HPLC-Detektoren) einzusetzen; insbesondere soll ein Spektralbereich der Wellenlänge λ von 200 - 350 nm mit möglichst hoher Strahlungsstabilität erzielt werden.

Die Aufgabe wird durch die kennzeichnenden Merkmale des Anspruchs 1 gelöst.

Als vorteilhaft erweist sich insbesondere die große spektrale Bandbreite im Kontinuum der abgegebenen Strahlung sowie die fehlende Beeinträchtigung der Lampenatmosphäre durch eingebrachtes Elektrodenmaterial; hieraus ergibt sich auch eine Erhöhung der Lebensdauer. Ein weiterer Vorteil ist in der gerichteten Abstrahlung bei hoher Strahldichte unter einem kleinen Raumwinkel zu sehen.

Weiterhin ermöglicht der einfache geometrische Aufbau eine sehr geringe Baugröße, so daß ggf. eine Aufbringung der Strahlenquelle auf eine Leiterplatte ermöglicht wird.

Weitere vorteilhafte Ausgestaltungen sind in den Ansprüchen 2 bis 14 angegeben.

Als besonders vorteilhaft erweist sich die Möglichkeit, eine Entladungslampe mit zwei sich gegenüberliegenden Strahlenaustrittsfenstern entlang der optischen Achse vorzusehen, da mit Hilfe einer zusätzlichen Strahlenquelle die entlang der optischen Achse geführte Strahlung in ihrem Spektrum ergänzt werden kann; auf diese Weise ist es beispielsweise möglich, zusätzliche Anteile des sichtbaren und/oder infraroten Spektrums der mit der erfindungsgemäßen Entladungslampe erzeugten UV-Strahlung zu überlagern.

Im folgenden ist der Gegenstand der Erfindung anhand der Figuren 1 bis 6 näher erläutert.
Figur 1 zeigt im Längsschnitt eine hochfrequenzangeregte Niederdruckentladungslampe mit Mehrfachblenden, welche einen Strahlenaustritt mit einem engen Raumwinkel entlang der Strahlenaustrittsachse mit hoher Strahldichte aufweist;
Figur 2 zeigt im Längsschnitt eine Entladungslampe mit einem einstückig ausgestalteten Entladungsgefäß, das Entladungsgefäß und Blendenkörper als monolithische Anordnung bildet;
Figur 3 zeigt eine mögliche Ausführungsform mit Blenden und Halterung im Entladungskörper;
Figur 4 zeigt eine Entladungslampe, deren Entladungsgefäß zwei sich gegenüberliegende Stirnflächen mit jeweils einem Austrittsfenster aufweist;
Figur 5 zeigt eine elektrische Schaltungsanordnung zur Ansteuerung einer kapazitiv angeregten Lampe;
Figur 6 zeigt das Spektrum der erfindungsgemäßen Lampe.

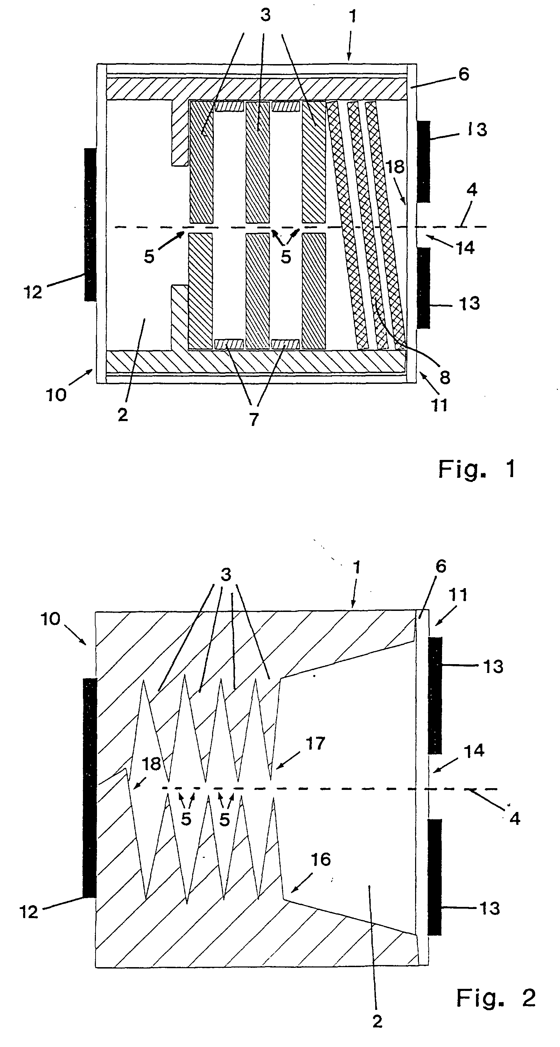

Gemäß Figur 1 weist die Entladungslampe ein axialsymmetrisches Entladungsgefäß 1 aus hochtemperaturbeständigem elektrisch isolierendem Werkstoff auf, das im mittleren Bereich seines Innenraumes 2 drei Blenden bzw. Blendenkörper 3 enthält, die entlang einer optischen Achse 4 durchgehende Öffnungen 5 aufweisen. Sowohl das Entladungsgefäß 1 als auch die Blenden bzw. Blendenkörper 3 können aus hochtemperaturbeständigen Keramikmaterialien wie Bornitrid, Aluminiumnitrid, Aluminiumoxid, Thoriumoxid, Berylliumoxid, polykristallinem Diamant oder aber auch aus hochschmelzenden metallischen Werkstoffen wie Molybdän oder Wolfram bestehen; damit können hohe Strahlungsflüsse und Strahlungsdichten bei kleinem Raumwinkel erzielt werden; der ebene Winkel der Strahlung weist eine Halbwertsbreite im Bereich von 0,05 bis 0,1 rad auf; es ist selbstverständlich problemlos möglich, durch Variation der Geometrien von Blenden-Anzahl, Blenden-Abstand und Austrittsöffnung 14 bzw. 21 den Winkel der Strahlung in einem weiten Bereich zu verändern.

Das Entladungsgefäß 1 weist an wenigstens einer seiner beiden Stirnseiten entlang der Achse 4 ein wenigstens für UV-Strahlung transparentes Strahlenaustrittsfenster 6 auf, das beispielsweise aus Quarzglas, aus Glas oder aus Saphir besteht.

Der Übergang zwischen dem Entladungsgefäß 1 und dem Strahlungsaustrittsfenster 6 kann durch Aufschmelzen des Randes des Austrittsfensters oder durch eine Verbindung zwischen Entladungsgefäß und Fenster mit Hilfe von Glaslot, sowie gegebenenfalls durch Übergangsgläser erfolgen. Das Entladungsgefäß 1 und die Blenden 3 können auch aus dem gleichen Werkstoff, d.h. auch aus einem Stück, bestehen; die Fenster werden dabei, wie bereits vorstehend erläutert, aufgebracht. Um eine definierte Position der Blenden 3 zueinander und zum Entladungsgefäß 1, bzw. der optischen Achse 4 zu gewährleisten, muß eine entsprechende Halterung z.B. durch Abstandsringe 7 in der Lampe vorgesehen werden unter Berücksichtigung der verschiedenen Eigenschaften der einzelnen Materialien und der Gasentladung. Um der Wärmeausdehnung der einzelnen Komponenten Rechnung zu tragen, werden vorzugsweise keramische, aus Quarzglas bestehende und/oder metallische hohlzylindrische schraubartige Federn 8 oder Blattfedern mit Erfolg eingesetzt. Alternativ bietet sich noch die Abstimmung der Wärmeausdehnungskoeffizienten der einzusetzenden Materialien an.

Die Blenden bzw. Blendenkörper 3 füllen einen großen Teil des Innenraums 2 aus (unter Berücksichtigung der Wärmeausdehnung). Die Blenden enthalten Bohrungen mit Durchmessern von 0,01 bis 6 mm insbesondere von 0,3 bis 6 mm und Dicken von 0,001 bis 100 mm, insbesondere von 0,01 bis 50 mm und Dicken von 0,001 bis 20 mm. Nach herstellungsbedingten Reinigungsmaßnahmen (Ausheizen, Ätzen, etc.), die dem Fachmann allgemein bekannt sind, wird das Entladungsgefäß mit Deuterium bei 1 bis 100 mbar Kaltfülldruck gefüllt.

Auf den Außenoberflächen der Stirnflächen 10, 11 des Entladungsgefäßes 1 sind jeweils Elektroden 12, 13 aus elektrisch leitendem Werkstoff entlang der Achse 4 sich gegenüberliegend aufgebracht; die auf der Strahlenaustrittsseite befindliche Elektrode 13 ist entlang der Achse 4 mit einer Öffnung 14 zum Strahlenaustritt versehen; als bevorzugter Werkstoff für die Elektroden hat sich insbesondere Kupfer mit galvanisch aufgebrachter Goldschicht bewährt; es ist jedoch auch möglich elektrisch leitende Pasten nach üblichen Verfahren der Dickfilmtechnik auf die Außenoberflächen der Stirnflächen 10, 11 unter Berücksichtigung der Öffnung 14 zum Strahlenaustritt aufzutragen und einzubrennen.

Figur 2 zeigt eine Variation der Ausführungsform zu Figur 1, bei der Entladungsgefäß 1, Stirnfläche 10 sowie Blendenkörper 3 aus einem monolithischen Material - vorzugsweise aus Keramik - gefertigt sind, wobei der Innenraum 2 im Bereich der Stirnfläche 11 durch eine Abdeckung als Strahlungs-Austrittsfenster 6 aus transparentem Werkstoff, vorzugsweise Quarzglas abgedeckt ist; entlang der Achse 4 sind sich gegenüberliegende Elektroden 12, 13 auf den Stirnflächen 10, 11 aufgebracht, wobei Elektrode 13 eine Strahlungsaustrittsöffnung 14 aufweist.

Der Außendurchmesser des weitgehend zylinderförmig ausgebildeten Systems (Kondensator, Entladungsgefäß, Blende) liegt im Bereich von 5 bis 80 mm; es ist jedoch auch möglich, eine weitere Miniaturisierung vorzusehen, die bis in den Bereich von Mikrostrukturen vorstößt; weiterhin kann die Blendengeometrie variiert werden; weiterhin ist eine Verformung der Blendenvorderseite 16 (austrittsfensterseitig) als Reflektor oder die Befestigung einer zweiten den UV-Spektralbereich reflektierenden Keramik mit Reflektorform 17 an der Blendenvorderseite möglich, um eine Erhöhung des Strahlungsflusses zu erzielen. Der rückwärtige Teil 18 des Entladungsgefäßes 1 kann ebenso wie die Blendenvorderseite 16 oder die Keramik als Reflektorform 17 verspiegelt und als Reflektor eingesetzt werden, so z.B. durch Auskleidung oder Beschichtung mit einer reflektierenden Keramik, einem Metall oder einer metallischen Beschichtung. Das nach hinten abgestrahlte Licht kann jedoch auch durch eine Verspiegelung auf der einen Elektrode bzw. Kodensatorplatte reflektiert und ebenfalls genutzt werden, sofern hierdurch der Innenraum 2 abgeschlossen ist.

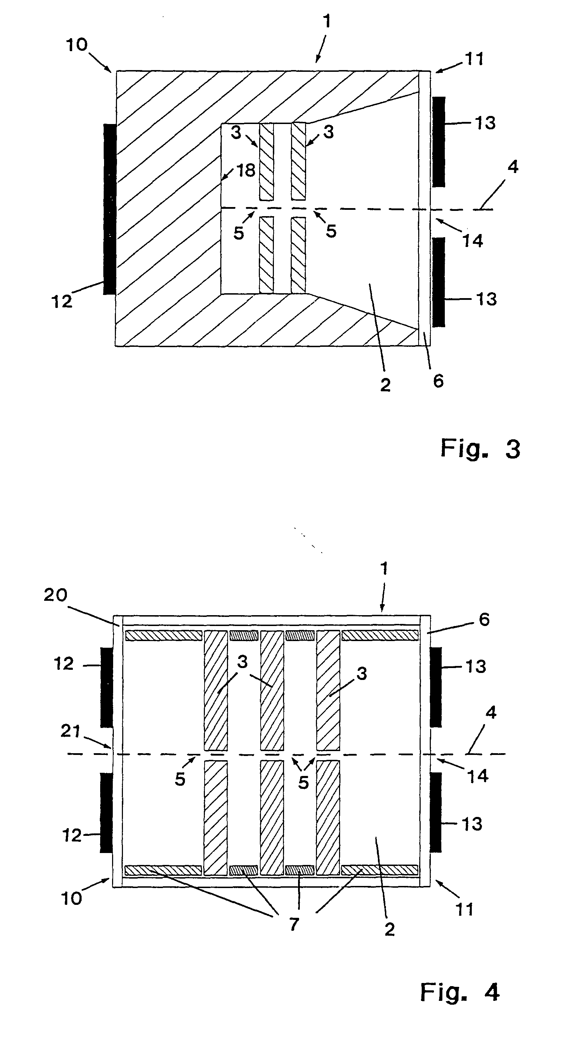

Figur 3 zeigt eine Ausführungsform für den Einsatz von hochschmelzenden keramischen oder metallischen Blenden bzw. Blendenkörper 3 im Entladungsgefäß 1. Das Entladungsgefäß 1, die Blenden bzw. Blendenkörper 3 und die Halterung der Blenden können sowohl aus einem Material als auch aus verschiedenen Materialien bestehen. Bei Anwendungen mit Strahlungsanordnungen hoher Strahldichte sind hierbei Keramiken, Quarz und hochschmelzende Metalle besonders geeignet. So können die Blenden 3 von dem als Halterung dienenden Entladungsgefäß 1 aus Keramik (beispielsweise) umschlossen werden, wobei die Blenden 3 aus einem anderen Material, wie z.B. hochschmelzendem Metall bestehen können.

Es ist möglich, neben Deuterium auch andere Füllgase einzusetzen; dabei wird eine intensivere Emission des eingeschnürten Plasmas beobachtet. Prinzipiell können alle Edelgase sowie Wasserstoff, Metalldämpfe (z.B. Quecksilberdampf) und reaktive Gase, sowie Kombinationen hieraus eingesetzt werden.

Figur 4 zeigt eine gegenüber Figur 1 modifizierte Entladungslampe mit zwei sich gegenüberliegenden Austrittsfenstern 6 und 20; elektrode 12 weist in diesem Fall einen ähnlichen Aufbau wie Elektrode 13 auf, d.h. daß Elektrode 12 auf dem zweiten Strahlenaustrittsfenster 20 aufliegt und entlang der optischen Achse 4 mit einer Öffnung 21 zum Strahlenaustritt bzw. Strahlendurchgang versehen ist. Aufgrund der sich entlang der Achse 4 erstreckenden Geometrie der Lampe ermöglicht sie in optimaler Weise eine Nutzung als Durchscheinlampe; d.h. ein zweiter Strahler mit anderem Spektrum kann auf der gleichen optischen Achse 4 des ersten Strahlers so angeordnet werden, daß dessen Strahlung auch durch die Blenden-Öffnungen 5 geführt wird und daß ohne Austausch der Lampen ein erweiterter nutzbarer Spektralbereich erhalten wird. Dieser zweite Strahler kann als externe austauschbare Einheit aufgebaut sein, er kann aber auch direkt an die erste Lampe optisch gekoppelt werden und mit ihr zusammen eine Doppelstrahlereinheit bilden. So kann beispielsweise die eine Entladungskammer eine Füllung aus Deuterium und die andere eine Xenon enthaltende Füllung erhalten, wobei sich die Spektren dann überlagern.

Das nach hinten bzw. durch Austrittsfenster 20 abgestrahlte Licht gemäß Figur 4 kann auch mit einer schnellen Photodiode detektiert und in einer Regelschleife zur Erhöhung der Stabilität der Lampe genutzt werden.

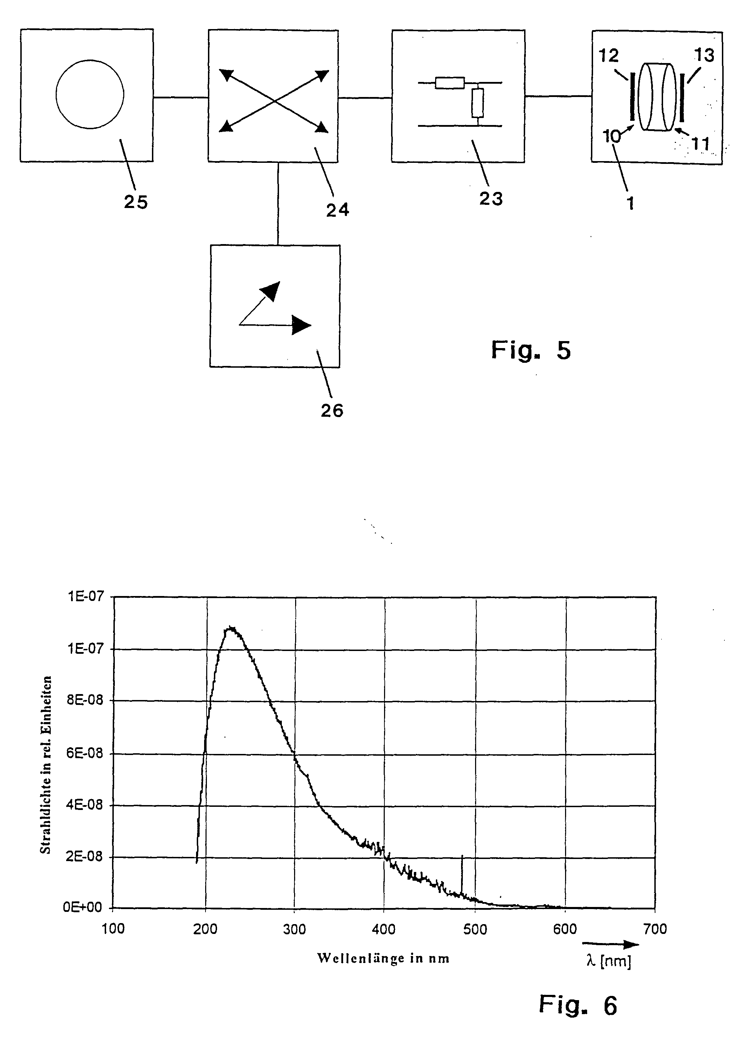

Gemäß Figur 5 ist zur elektrischen Ansteuerung die in dem Blockschaltbild dargestellte Schaltungsanordnung vorgesehen; die unter Ziffer 1 symbolisch dargestellte Lampe weist an ihren Stirnseiten 10, 11 jeweils eine Elektrode 12, 13 auf, die über ein elektrisches Ansteuernetzwerk 23 und einen Richtkoppler 24 von einem Generator 25 - d.h. mittels der Elektroden 12, 13 - kapazitiv angeregt wird. Der Generator 25 steht für die Abgabe von Leistungen im Bereich von 10 bis 100 Watt zur Verfügung, wobei die obere Frequenzgrenze bei ca. 100 Gigahertz, die untere bei 500 Hz liegt; insbesondere bei einer oberen Frequenzgrenze von 2,45 Gigahertz und einer unteren Frequenz von 10 KHz. Der Richtkoppler 24 dient lediglich zur Auskopplung eines Meßsignals zur Optimierung des Ansteuernetzwerkes 23 mit Hilfe eines Vektorvoltmeters 26.

Der für die Praxis besonders interessante Frequenzbereich des Generators 16 für hochfrequent angeregte Entladungslampen liegt im Bereich von einigen kHz (zur Vermeidung des Erlöschens der Entladung) bis zu einigen GHz. Die Generatorkosten steigen mit der Frequenz, so daß die derzeitige obere Frequenzgrenze bei ca. 2,45 GHz. liegt. Generatoren mit noch höheren Frequenzen sind entweder zu kostspielig oder stehen für die Abgabe von Leistungen im Bereich von 10 bis 100 Watt nicht mit praxisgerechten Wirkungsgraden zur Verfügung. Bei einer Erhöhung der Anregungsfrequenzen ergeben sich Verbesserungen im Wirkungsgrad der Lampen, zudem vereinfacht sich die Anpaßschaltung für die elektrodenlose Lampe, da Stichleitungen eingesetzt werden können. Weiterhin verändert sich die Reaktanz der Lampe bei einer Erhöhung der Frequenz hin zu geeigneteren Werten. (Die kleine Kapazität der Quarzwände hat bei kleinen Frequenzen eine große Reaktanz zur Folge, die nur mit sehr großen Induktivitäten angepaßt werden kann.) In der Praxis erfolgt der Betrieb im Frequenzbereich von 0,01 bis 2450 MHz, prinzipiell können somit beliebige Frequenzen in diesem Bereich eingesetzt werden; dabei hat sich eine Frequenz von ca. 13 MHz als besonders geeignet erwiesen. Die Anpassung erfolgt dabei nach den allgemein bekannten Transformationsschaltungen.

Das in Figur 6 dargestellte Spektrum einer erfindungsgemäßen Entladungslampe mit Deuteriumfüllung weist ein Kontinuum im Bereich von 200 bis 350 nm auf, das sich aufgrund der hohen Strahlungsstabilität für analytische Messungen besonders eignet.

## Patentansprüche

1. Elektrodenlose Niederdruck-Entladungslampe, in deren Entladungsgefäß (1) ein Plasma durch Einkoppelung eines hochfrequenten elektromagnetischen Feldes gebildet ist und durch das Plasma erzeugte Strahlung aus dem Entladungsgefäß (1) durch einen wenigstens für UV-Strahlen durchlässigen Bereich des Entladungsgefäßes austritt, wobei im Bereich des Plasmas wenigstens ein Blendenkörper (3) aus hochtemperaturbeständigem Werkstoff angeordnet ist, der wenigstens eine Öffnung (5) zur Einschnürung des Plasma-Bereichs aufweist, **dadurch gekennzeichnet, daß** im Plasma-Bereich wenigstens zwei Blenden-Öffnungen (5) in einer optischen Achse (4) vorgesehen sind, entlang derer die Strahlung austritt.

2. Entladungslampe nach Anspruch 1, **dadurch gekennzeichnet, daß** wenigstens drei Blenden-Öffnungen (5) hintereinander auf der optischen Achse (4) angeordnet sind.

3. Entladungslampe nach Anspruch 1 oder 2, **dadurch gekennzeichnet, daß** wenigstens zwei Blenden-Öffnungen (5) in einem monolithischen Blendenkörper (3) vorgesehen sind.

4. Entladungslampe nach Anspruch 3, **dadurch gekennzeichnet, daß** der Blendenkörper (3) und Entladungsgefäß (1) monolithisch aus einem Werkstoff gebildet sind, wobei wenigstens eine Stirnfläche (10,11) des Entladungsgefäßes (1) mit einem wenigstens für UV-Strahlen durchlässigen Austrittsfenster (6, 20) abgedeckt ist.

5. Entladungslampe nach einem der Ansprüche 1 bis 4, **dadurch gekennzeichnet, daß** zur kapazitiven Einkoppelung des elektromagnetischen Feldes das Entladungsgefäß (1) entlang der Strahlen-Achse (4) jeweils an seinen Enden mit einer flächenhaften Elektrode (12, 13) versehen ist, wobei wenigstens eine der Elektroden (12, 13) eine Öffnung (21, 14) im Bereich der Achse (4) des Strahlenaustritts enthält, die dem Austrittsfenster (6, 20) benachbart angeordnet ist.

6. Entladungslampe nach einem der Ansprüche 1 bis 5, **dadurch gekennzeichnet, daß** das Entladungsgefäß (1) eine Stirnseite mit Austrittsöffnung (14) aufweist, wobei die der Austrittsöffnung abgewandte Stirnseite wenigstens auf ihrer Innenseite eine die erzeugte Strahlung reflektierende Oberfläche aufweist.

7. Entladungslampe nach einem der Ansprüche 1 bis 6, **dadurch gekennzeichnet, daß** der Blendenkörper (3) eine durchgehende Bohrung aufweist, wobei beide Stirnseiten (10, 11) des Entladungsgefäßes (1) einen Strahlenaustritt entlang der optischen Achse (4) durch jeweils eine von den Elektroden (12, 13) gebildeten Öffnung (21, 14) ermöglichen, wobei jede der Öffnungen (21, 14) durch ein Strahlenaustrittsfenster (6, 20) hermetisch dicht abgeschlossen ist.

8. Entladungslampe nach Anspruch 7, **dadurch gekennzeichnet, daß** die Strahlenachse (4) entlang der Strahlenachse einer zusätzlichen Strahlungsquelle angeordnet ist, wobei durch Blendenöffnung (5) auch Strahlung der zusätzlichen Strahlungsquelle geführt wird.

9. Entladungslampe nach einem der Ansprüche 1 bis 8, **dadurch gekennzeichnet, daß** der Durchmesser der Blendenöffnung (5) im Bereich von 0,01 bis 6 mm liegt.

10. Entladungslampe nach einem der Ansprüche 1 bis 9, **dadurch gekennzeichnet, daß** der Blendenkörper (3) aus Aluminiumoxid, Aluminiumnitrid, Bornitrid besteht.

11. Entladungslampe nach einem der Ansprüche 1 bis 9, **dadurch gekennzeichnet, daß** der Blendenkörper (3) aus Thoriumoxid, Berylliumoxid oder polykristallinem Diamant besteht.

12. Entladungslampe nach einem der Ansprüche 1 bis 9, **dadurch gekennzeichnet, daß** der Blendenkörper (3) aus hochtemperaturbeständigem Metall besteht, wobei zwischen den Elektroden (12, 13) und dem Blendenkörper (3) jeweils ein elektrisch isolierendes Bauelement als Austrittsfenster (6, 20) oder als Isolierkörper angeordnet ist.

13. Entladungslampe nach einem der Ansprüche 1 bis 12, **dadurch gekennzeichnet, daß** als Füllung Deuterium mit einem Kaltfülldruck von 1 bis 100 mbar vorgesehen ist.

14. Entladungslampe nach einem der Ansprüche 1 bis 13, **dadurch gekennzeichnet, daß** die Elektroden (12, 13) an einem Hochfrequenz-Generator (25) angeschlossen sind, der eine Anregungsfrequenz im Bereich von 500 Hz bis 100 GHz erzeugt.

## Claims

1. Electrodeless low-pressure discharge lamp in the discharge vessel (1) of which a plasma is formed by exciting a high-frequency electromagnetic field and radiation generated by the plasma emerges from the discharge vessel (1) through a region of the discharge vessel which transmits at least UV rays, wherein in the region of the plasma is arranged at least one stop body (3) made of high temperature-resistant material which comprises at least one opening (5) for constriction of the plasma region, **characterised in that** in the plasma region are provided at least two stop openings (5) in an optical axis (4) along which the radiation emerges.

2. Discharge lamp according to claim 1, **characterised in that** at least three stop openings (5) are arranged one behind the other on the optical axis (4).

3. Discharge lamp according to claim 1 or 2, **characterised in that** at least two stop openings (5) are provided in a monolithic stop body (3).

4. Discharge lamp according to claim 3, **characterised in that** the stop body (3) and discharge vessel (1) are formed monolithically from one material, wherein at least one end face (10, 11) of the discharge vessel (1) is covered with an outlet window (6, 20) which transmits at least UV rays.

5. Discharge lamp according to one of claims 1 to 4, **characterised in that** for capacitive excitation of the electromagnetic field the discharge vessel (1) is provided along the beam axis (4) at each of its ends with a planar electrode (12, 13), wherein at least one of the electrodes (12, 13) contains an opening (21, 14) in the region of the axis (4) of beam emergence, which is arranged adjacent to the outlet window (6, 20).

6. Discharge lamp according to one of claims 1 to 5, **characterised in that** the discharge vessel (1) comprises an end side with outlet opening (14), wherein the end side facing away from the outlet opening comprises at least on its inner side a surface which reflects the radiation generated.

7. Discharge lamp according to one of claims 1 to 6, **characterised in that** the stop body (3) comprises a through-hole, wherein both end sides (10, 11) of the discharge vessel (1) allow beam emergence along the optical axis (4) through in each case one opening (21, 14) formed by the electrodes (12, 13), wherein each of the openings (21, 14) is hermetically sealed by an outlet window (6, 20).

8. Discharge lamp according to claim 7, **characterised in that** the beam axis (4) is arranged along the beam axis of an additional radiation source, wherein radiation of the additional radiation source is also conducted through stop opening (5).

9. Discharge lamp according to one of claims 1 to 8, **characterised in that** the diameter of the stop opening (5) is within the range from 0.01 to 6 mm.

10. Discharge lamp according to one of claims 1 to 9, **characterised in that** the stop body (3) is made of aluminium oxide, aluminium nitride, boron nitride.

11. Discharge lamp according to one of claims 1 to 9, **characterised in that** the stop body (3) is made of thorium oxide, beryllium oxide or polycrystalline diamond.

12. Discharge lamp according to one of claims 1 to 9, **characterised in that** the stop body (3) is made of high temperature-resistant metal, wherein between the electrodes (12, 13) and the stop body (3) is arranged in each case an electrically insulating component as an outlet window (6, 20) or as an insulating body.

13. Discharge lamp according to one of claims 1 to 12, **characterised in that** deuterium with a cold-fill pressure of 1 to 100 mbars is provided as the filling.

14. Discharge lamp according to one of claims 1 to 13, **characterised in that** the electrodes (12, 13) are connected to a high-frequency generator (25) which generates an exciting frequency within the range from 500 Hz to 100 GHz.

## Revendications

1. Lampe à décharge à basse pression sans électrodes, dans l'enceinte de décharge (1) de laquelle est créé un plasma par couplage d'un champ électromagnétique à fréquence élevée et le rayonnement généré par le plasma émergeant de l'enceinte de décharge (1) émergeant par une région de l'enceinte de décharge transparente au moins aux rayons UV, dans la région du plasma est disposé au moins un corps d'obturateur (3) en matériau résistant aux températures élevées, qui présente au moins une ouverture (5) en vue de l'étranglement de la région du plasma, **caractérisée en ce que**, dans la région du plasma, sont prévues au moins deux ouvertures d'obturateur (5) selon un axe optique (4), le long duquel émerge le rayonnement de celui-ci.

2. Lampe à décharge selon la revendication 1, **caractérisée en ce qu'**au moins trois ouvertures d'obturateur (5) sont disposées en succession sur l'axe optique (4).

3. Lampe à décharge selon la revendication 1 ou 2, **caractérisée en ce qu'**au moins deux ouvertures d'obturateur (5) sont prévues dans un corps d'obturateur monolithique (3).

4. Lampe à décharge selon la revendication 3, **caractérisée en ce que** le corps d'obturateur (3) et l'enceinte de décharge (1) sont formés de manière monolithique en un matériau, au moins un côté frontal (10, 11) de l'enceinte de décharge (1) étant recouvert avec une fenêtre d'émergence (6, 20) transparente au moins pour les rayons UV.

5. Lampe à décharge selon une des revendications 1 à 4, **caractérisée en ce qu'**en vue du couplage capacitif du champ électromagnétique, l'enceinte de décharge (1) est munie le long de l'axe des rayons (4) à ses extrémités d'une électrode plate (12, 13), au moins une des électrodes (12, 13) contenant une ouverture (21, 14) à proximité de l'axe (4) de l'émergence des rayons, qui est disposée adjacente à La fenêtre d'émergence (6, 20).

6. Lampe à décharge selon une des revendications 1 à 5, **caractérisée en ce que** l'enceinte de décharge (1) présente un côté frontal avec l'ouverture d'émergence (14), le côté frontal éloigné de l'ouverture d'émergence présentant au moins sur son côté interne une surface réfléchissant le rayonnement généré.

7. Lampe à décharge selon une des revendications 1 à 6, **caractérisée en ce que** le corps d'obturateur (3) présente un perçage continu, les deux côtés frontaux (10, 11) de l'enceinte de décharge (1) permettant une émergence des rayons le long de l'axe optique (4) par une ouverture (21, 14) formée par une des électrodes (12, 13), chacune des ouvertures (21, 14) étant fermée hermétiquement par une fenêtre d'émergence de rayons (6, 20).

8. Lampe à décharge selon la revendication 7, **caractérisée en ce que** l'axe des rayons (4) est disposé le long de l'axe des rayons d'une source de rayonnement supplémentaire, également le rayonnement de la source de rayonnement supplémentaire étant guidé à travers l'ouverture d'obturateur (5).

9. Lampe à décharge selon l'une des revendications 1 à 8, **caractérisée en ce que** le diamètre de l'ouverture d'obturateur (5) est compris entre 0,01 et 6 mm.

10. Lampe à décharge selon une des revendications 1 à 9, **caractérisée en ce que** le corps d'obturateur (3) est en oxyde d'aluminium, en nitrure d'aluminium, en nitrure de bore.

11. Lampe à décharge selon une des revendications 1 à 9, **caractérisée en ce que** le corps d'obturateur (3) est en oxyde de thorium, en oxyde de béryllium ou en diamant polycristallin.

12. Lampe à décharge selon une des revendications 1 à 9, **caractérisée, en ce que** le corps d'obturateur (3) est en métal résistant aux températures élevées, entre les électrodes 12, 13 et le corps d'obturateur (3) étant disposé un composant électriquement isolant en tant que fenêtre d'émergence (6, 20) ou en tant que corps isolant.

13. Lampe à décharge selon une des revendications 1 à 12, **caractérisée en ce que** qu'en tant que remplissage est prévu du deutérium avec une pression de remplissage à froid de 1 à 100 mbar.

14. Lampe à décharge selon une des revendications 1 à 13, **caractérisée en ce que** les électrodes 12, 13 sont reliées à un générateur à fréquence élevée (25), qui génère une fréquence d'excitation comprise entre 500 Hz et 100 GHz.
